# EUROPEAN PATENT SPECIFICATION

(11) **EP 2 435 200 B1**
(45) Date of publication and mention of the grant of the patent: **17.04.2013**
(21) Application number: 10740254.7
(22) Date of filing: 26.05.2010
(51) Int. Cl.: B21F 27/12, B23K 11/00

(54) **MACHINE TO MAKE REINFORCEMENT CAGES, WELDING DEVICE TO MAKE REINFORCEMENT CAGES AND RELATIVE PRODUCTION METHOD**
MASCHINE ZUR HERSTELLUNG VON BEWEHRUNGSKÖRBEN, SCHWEISSVORRICHTUNG ZUR HERSTELLUNG VON BEWEHRUNGSKÖRBEN UND ENTSPRECHENDES HERSTELLUNGSVERFAHREN
MACHINE DE FABRICATION DE CAGES D'ARMATURE, DISPOSITIF DE SOUDAGE POUR FABRIQUER DES CAGES D'ARMATURE ET PROCÉDÉ DE PRODUCTION ASSOCIÉ

(30) Priority: 28.05.2009 IT UD20090109
(43) Date of publication of application: 04.04.2012
(73) Proprietor: M.E.P. Macchine Elettroniche Piegatrici S.p.A., 33010 Reana del Rojale (UD) (IT)
(72) Inventor: TABOGA, Ermanno, I-33030 Buia (IT)
(74) Representative: Petraz, Davide Luigi
(86) International application number: PCT/IB2010/001244
(87) International publication number: WO 2010/136880

(56) References cited:
- DE-A1- 19 535 547
- US-A- 5 665 254

## Description

### FIELD OF THE INVENTION

The present invention concerns a machine to make reinforcement cages, in particular cylindrical, but also square or polygonal in general, formed by a plurality of longitudinal bars around which a metal round piece is wound and welded in a spiral. The cages are normally used in the building trade, for example to make columns in reinforced concrete.

The present invention also concerns a welding device in order to consolidate the coupling between the longitudinal bars and the metal round pieces, as well as the method to produce the cages by means of the aforesaid machine and the aforesaid device.

### BACKGROUND OF THE INVENTION

A machine to make cylindrical reinforcement cages of the type indicated above is known, for example from US-A-5665254, comprising a first head provided with a rotating plate on which the ends of the longitudinal bars are attached, a second head on which the spiral welding devices of the metal round piece are assembled, and a plurality of support means, sliding along the whole length of the longitudinal bars, and able to support the segments of the bars on which the metal round piece has not yet been fixed. The first head and the second head are relatively movable with respect to each other.

The coordinated action between the rotation of the rotating plate and the relative movement with the second head determines the deposition in a spiral of the metal round piece.

In known machines, the welding devices are of the tracking type and are conformed to follow, in a segment, the rotation of each longitudinal bar, remaining fastened to and drawn by the latter at least for the time needed for it to be welded to the metal round piece.

It is a requirement of this field to provide reinforcement cages in which the longitudinal bars are distributed in groups, or pairs, along the profile of the cage itself.

Current welding devices, because of their conformation and functional conception, cannot carry out a double tracking welding, in order to weld the metal round piece to all the longitudinal bars of each group, or pair.

This functional limitation entails different operating problems in the case where it is necessary to make a cage with the longitudinal bars in groups, or pairs.

In practice, these problems are resolved with subsequent repeat steps and completely carried out, generally, with empirical solutions, very often manually. This known solution involves more time and higher production costs and does not guarantee a satisfactory and repeatable degree of quality of the metal cage produced.

One purpose of the present invention is to perfect a machine and a welding device to make reinforcement cages, also of the type having longitudinal bars in groups or pairs, which is simple and economic to produce, which has a reduced if not zero effect on the normal working times, and which guarantees a satisfactory and repeatable degree of quality substantially for every type of production.

Another purpose of the present invention is to perfect a method which allows to produce reinforcement cages, also of the type having longitudinal bars in groups or pairs, which overcomes the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention is applied advantageously, but not only, to the production of reinforcement cages consisting of a plurality of longitudinal bars distributed in groups or pairs on the profile of the cage itself, and of at least a metal round piece wound and welded in a spiral around the longitudinal bars.

The machine according to the present invention comprises at least a first head provided with a rotating plate with which the ends of the longitudinal bars are associated, and a second head on which at least a welding device for the metal round piece is assembled.

The first head and the second head are reciprocally movable in a longitudinal direction with respect to the direction of formation of the reinforcement cage.

The kinematic combination between the rotation of the longitudinal bars imparted by the first head, and the reciprocal movement of the first and the second head, determines the spiral disposition of the metal round piece on the longitudinal bars.

According to a characteristic feature of the present invention, the welding device comprises a welding slider mounted sliding on the second head in a direction substantially transverse to the direction of formation of the reinforcement cage.

The welding slider comprises welding means able to weld the metal round piece to the longitudinal bars of each group or pair, and at least two selectively movable stopping members.

In particular, each of the at least two stopping members is movable between a first constrained position in which it cooperates through contact with one of the longitudinal bars of each group or pair, in order to temporarily constrain the slider to the rotation of the longitudinal bars and to hold the welding means in correspondence with a determinate one of the longitudinal bars, and a second release position in which it does not interfere with the longitudinal bars and allows the relative movement, for at least a segment, of the longitudinal bars and the welding slider.

According to the invention, in a preferential but non-limiting solution in which the longitudinal bars are provided in pairs, the operating sequence for welding the metal round piece to both the longitudinal bars of the pair provides the following steps.

A first step in which a first and a second stopping member are both in the first position, so that the first stopping member cooperates through contact with a first longitudinal bar of the pair, holding the welding means in correspondence with said first longitudinal bar.

A second step in which the first stopping member is taken to the second position, while a second stopping member stays in the first position. In this condition, there is a reciprocal movement between the slider and the longitudinal bars until there is contact between the first longitudinal bar and the second stopping member. This contact determines the positioning of the welding means in correspondence with the second longitudinal bar.

A third step provides that the second stopping member is also taken to the second position, freeing the movement of the longitudinal bars welded to the metal round piece, with respect to the welding slider.

In a fourth step, both the stopping members are returned to the first position in order to start a new welding cycle with respect to a new pair of longitudinal bars.

In this way, using the alternate movement of the stopping members it is possible to position the welding means in sequence in correspondence with each longitudinal bar, guaranteeing the correct welding of the metal round piece to each longitudinal bar.

With the present invention, therefore, both a satisfactory quality and a repeated quality of welding is guaranteed.

Furthermore, since the weldings are carried out in tracking manner, during the steps when the metal round piece is deposited on the longitudinal bars, the incidence of the welding operations on the overall operation to produce the metal cages is almost zero, and also subsequent re-starting and completion steps are avoided.

### BRIEF DESCRIPTION OF THE DRAWINGS

These and other characteristics of the present invention will become apparent from the following description of a preferential form of embodiment, given as a non-restrictive example with reference to the attached drawings wherein:

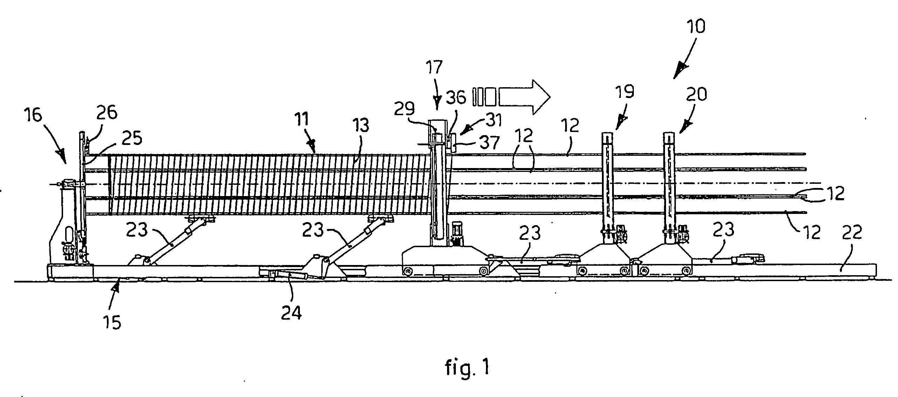

- fig. 1 shows a schematized lateral view of a machine to produce cages according to the present invention;
- fig. 2 shows a front view of a welding device of the machine in fig. 1, in a first operating step;
- fig. 3 shows a front view of a welding device of the machine in fig. 1, in a second operating step;
- fig. 4 shows a front view of a welding device of the machine in fig. 1, in a third operating step;
- fig. 5 shows a front view of a welding device of the machine in fig. 1, in a fourth operating step;

### DETAILED DESCRIPTION OF A PREFERENTIAL FORM OF

### EMBODIMENT

With reference to the attached drawings, a machine 10 according to the present invention is applied for the production of a reinforced cage 11, not shown in its entirety, in this case cylindrical, for example of the type used in the building trade to make reinforced concrete columns.

The cylindrical cage 11 comprises a plurality of longitudinal bars 12, disposed parallel with respect to each other in pairs along an ideal circumference, and distanced angularly one from the other at an angle, in this case of about 60°.

The cylindrical cage 11 also comprises a clamping round piece 13, wound and welded in a spiral around each of the longitudinal bars 12, so as to unite the pairs of longitudinal bars 12 with each other, and to define a consolidated cylindrical structure.

The machine 10 according to the present invention comprises, in general, a base frame 15, on which are mounted, starting from left to right, a first head 16, in this case fixed, a second head 17, in this case sliding longitudinally, and two support means, in this case consisting of a first 19 and a second 20 slider.

Adjacent to the base frame 15 a store is provided, not shown, for pre-cut longitudinal bars 12, by means of which the longitudinal bars 12 are fed in sequence to the machine 10.

The base frame 15 comprises two tracks 22, which run substantially along the whole length of the machine 10, on which the second head 17 and the two sliders 19 and 20 slide, and four arms 23, disposed between the tracks 22, and able to support the cylindrical cage 11 which is progressively formed.

In particular, the four arms 23 are independently movable, by means of respective linear actuators 24, between a first operating position in which they are angled toward the top with respect to the tracks 22, and a second retracted position in which they are substantially parallel to the tracks 22.

Typically the first head 16 substantially comprises a motorized rotating plate 25 provided with a plurality of clamps 26, in this case six and advantageously adjustable, on each of which the ends of the pairs of longitudinal bars 12 are attached.

The second head 17 comprises a motorized trolley 29 mounted sliding on the tracks 22, a feeder device of the clamping round piece 13, not shown here, and a welding member 31, suitable to weld the clamping round piece 13 to the longitudinal bars 12.

The welding member 31 is of the tracking type, that is, of the type able to carry out the welding following the movement of the parts to be welded. The welding member 31 comprises a support arm 36 mounted on the motorized trolley 29, and a welding slider 37 mounted sliding on the support arm 36.

The slider 37 has two guide wheels 39, disposed aligned with respect to each other and able to overlap the clamping round piece 13, immediately upstream and immediately downstream of the point of tangency of the latter with the longitudinal bars 12.

The welding slider 37 also comprises a welder 40, for example a seam welder, disposed laterally to and between the two guide wheels 39, so as to weld the clamping round piece 13 to a longitudinal bar 12, in proximity to the point of tangency between the two.

Two stopping actuators are also mounted on the welding slider 37, respectively the first 41 and the second 42, oriented substantially transverse to the direction of formation of the cage 11.

In particular the two stopping actuators 41 and 42 are disposed in sequence with each other with respect to the direction of rotation of the pairs of longitudinal bars 12 during the formation of the cage 11.

Each stopping actuator 41 and 42 is selectively movable in an independent and autonomous manner with respect to the other, in a direction substantially radial to the cage 11 between a first constrained position and a second released position.

In particular, each stopping actuator 41 and 42, in its first position, is substantially lowered and in cooperation with a first of the two longitudinal bars 12 of the pair while, in its second position, it is substantially raised with respect to the pair of longitudinal bars 12, in order to allow the relative movement of the welding slider 37 and the longitudinal bars 12.

In this case, when it is in the first position the first actuator 41 contacts the first of the two longitudinal bars 12, holding the welder 40 in correspondence with the first longitudinal bar 12 of the pair, so as to carry out the welding of the clamping round piece 13 to the latter.

The second actuator 42 is desirably distanced from the first actuator 41 and has an autonomous movement with respect to the latter.

The second actuator 42, when it is in its first position, is able to contact the first of the two longitudinal bars 12 and to hold the welder 40 in correspondence with the second longitudinal bar 12 of the pair, so as to carry out the welding of the clamping round piece 13 to the latter.

Advantageously, the distance between the first actuator 41 and the second actuator 42 is selectively adjustable according to the diameter of the longitudinal bars 12 and/or the distance between them, so that the welder 40 is positioned with precision in correspondence with one or the other of the longitudinal bars 12 to be welded.

The welding slider 37 also comprises a positioning spring 43, suitably constrained to the welding slider 37 and to the support arm 36, so as to elastically move the welding slider 37 and to keep one or other of the two actuators 41 or 42 in contact with the first longitudinal bar 12, when they are in their first position, compensating the continuous variation in movement due to the rotational movement of the longitudinal bars 12 and of the clamping round piece 13 during the pressing step.

The machine 10 for the production of reinforced cages 11 as described heretofore functions as follows.

Initially the longitudinal bars 12 are loaded in pairs on the machine 10, and are disposed between the first head 16, to which they are also clamped by means of clamps 26, and the second head 17.

In this case the pairs of longitudinal bars 12 are disposed substantially parallel to each other and distanced angularly at 60° from each other.

When the loading of the longitudinal bars 12 onto the machine 10 is finished, the feeder device is activated, so as to take one end of the clamping round piece 13 in correspondence with one of the longitudinal bars 12. This end of the clamping round piece 13 is welded, by means of the welding device 31, to the longitudinal bar 12 and then the rotating plate 25 is made to rotate. The rotation of the rotating plate 25 causes a relative winding of the clamping round piece 13 around the longitudinal bars 12.

At this point the longitudinal advance of the second head 17 is commanded in a first operating direction, that is, away from the first fixed head 16.

The advance of the second head 17, in association with the rotation of the longitudinal bars 12 and the tangential feed of the clamping round piece 13, determines a substantially spiral positioning of the latter with respect to the longitudinal bars 12.

During the rotation, the clamping round piece 13 is progressively welded by the welding device 31 to the longitudinal bars 12, which pass through the point of tangency.

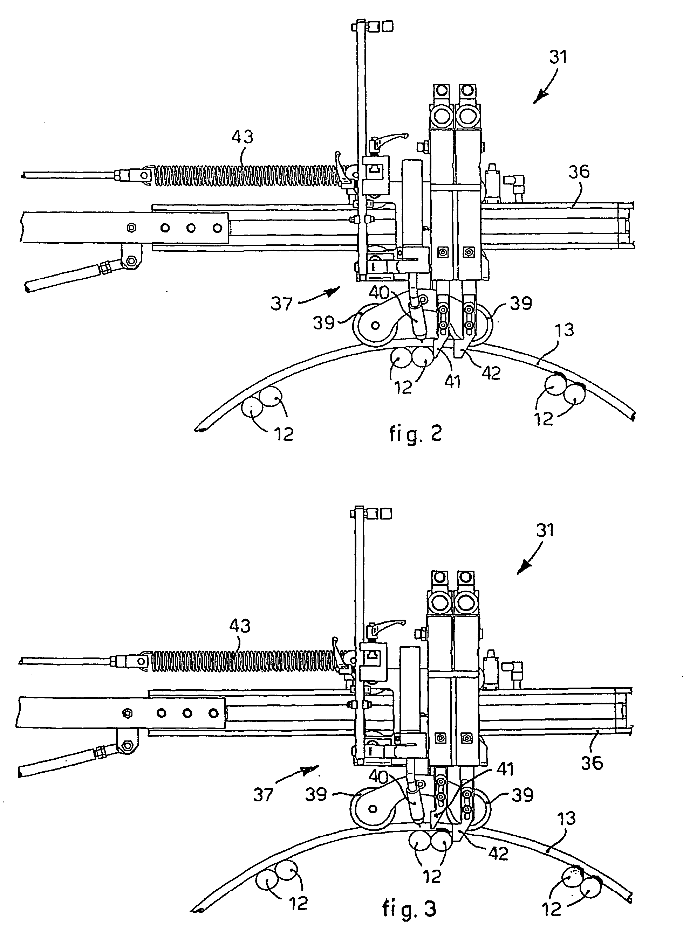

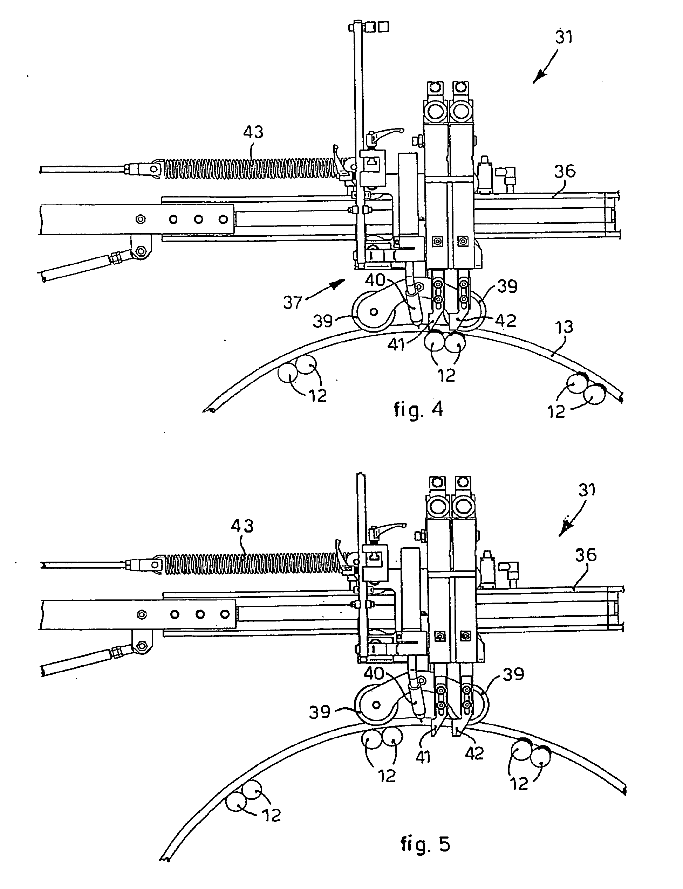

With particular reference to figs. 2 and 5, the welding of the clamping round piece 13 to the longitudinal bars 12 occurs according to the following steps.

Initially, both the first and the second stopping actuators 41 and 42 are in their first position, so that the first actuator 41 contacts the first longitudinal bar 12 of the pair, so as to keep the welder 40 in correspondence with the first longitudinal bar 12 in order to weld it to the clamping round piece 13 (fig. 2).

Once the welding of the first longitudinal bar 12 is terminated, the first actuator 41 is taken to the second position, while the second actuator 42 stays in the first position.

Due to the action of the positioning spring 43, there is an elastic movement of the welding slider 37 with respect to the longitudinal bars 12 until the second actuator 42 is taken into contact with the first longitudinal bar 12.

The welder 40 is therefore positioned in correspondence with the second longitudinal bar 12, in order to carry out the welding of the clamping round piece 12 to the latter (fig. 3).

Once the welding of the clamping round piece 13 to the second longitudinal bar 12 has been completed, the second actuator 42 is also taken into the second position, freeing the movement of the welded longitudinal bars 12 with respect to the welding slider 37 (fig. 4).

Due to the elastic action of the positioning spring 43, the welding slider 37 returns to its initial position with respect to the support bar 36 and both the actuators 41 and 42 are returned to the first position, to begin a new welding cycle with respect to a new pair of longitudinal bars 12.

It is clear, however, that modifications and/or additions of parts or steps may be made to the machine 10, the device 31 and the method as described heretofore, without departing from the field and scope of the present invention.

For example, it comes within the scope of the present invention to provide a number of actuators 41 and 42 other than two, according to the number of longitudinal bars 12, or the type of cylindrical cage 11 to be made.

It also comes within the scope of the present invention to provide that the adjustment of the reciprocal distance between the two actuators 41 and 42 is made in an automated manner, for example by means of electronic command and control systems of a known type, such as traducers, sensors or other.

It also comes within the scope of the present invention to provide a number of stopping actuators 41 and 42 equivalent to the number of longitudinal bars 12 of each group, so as to defme in sequence different welding positions of the welder 40, each position in correspondence with a relative longitudinal bar 12.

It is also clear that, although the present invention has been described with reference to specific examples, a person of skill in the art shall be able to achieve many other equivalent forms of machine to make cylindrical cages, welding device to make the cages and relative production method, all coming within the field of protection of the invention.

## Claims

1. Machine to make reinforcement cages (11) provided with a plurality of longitudinal bars (12) distributed in groups, each group comprising at least two longitudinal bars (12), and at least a metal round piece (13) welded in a spiral around said longitudinal bars (12), said machine comprising at least a first rotating head (16) on which said longitudinal bars (12) are able to be associated, and a second head (17) on which at least a welding device (31) is mounted, **characterized in that** said welding device (3 1) comprises at least a welding slider (37) movable transversely to the direction of formation of said reinforcement cage (11), welding means (40) able to weld the metal round piece (13) to the longitudinal bars (12) of each group, and at least two stopping members (41, 42), each selectively movable between a first position in which it cooperates through contact with one of said longitudinal bars (12) of each group, and holds said welding means (40) in correspondence with a determinate one of said longitudinal bars (12), and a second position in which it does not interfere with said longitudinal bars (12) and allows the relative movement, for at least a segment, of said longitudinal bars (12) and said welding slider (37).

2. Machine as in claim 1, **characterized in that** each stopping member (41, 42) is movable in an autonomous and independent manner with respect to the other stopping member (41, 42) between the first position and the second position.

3. Machine as in any claim hereinbefore, **characterized in that** the distance between the stopping members (41, 42) can be selectively chosen depending on the diameter of the longitudinal bars (12).

4. Machine as in any claim hereinbefore, **characterized in that** each stopping member comprises an actuator (41, 42) movable transversely with respect to the direction of formation of said reinforcement cage (11).

5. Machine as in any claim hereinbefore, **characterized in that** the stopping members (41, 42) are disposed one behind the other with respect to the direction of rotation imparted by the first head (16) to the longitudinal bars (12).

6. Machine as in any claim hereinbefore, **characterized in that** the welding device (31) also comprises an elastic member (43) constrained to the welding slider (37), so as to move said welding slider (37) elastically and hold at least one of the stopping members (41, 42) in contact with the relative longitudinal bar (12), when they are in their first position.

7. Welding device for a machine to make reinforcement cages (11) provided with a plurality of longitudinal bars (12) distributed in groups, and at least a metal round piece (13) welded in a spiral around said longitudinal bars (12), **characterized in that** it comprises at least a welding slider (37) movable transversely to the direction of formation of said reinforcement cage (11), welding means (40) able to weld the metal round piece (13) to the longitudinal bars (12) of each group, and at least two stopping members (41, 42), each selectively movable between a first position in which it cooperates through contact with one of said longitudinal bars (12) of each group, and holds said welding means (40) in correspondence with a determinate one of said longitudinal bars (12), and a second position in which it does not interfere with said longitudinal bars (12) and allows the relative movement, for at least a segment, of said longitudinal bars (12) and said welding slider (37).

8. Method to make reinforcement cages (11) provided with a plurality of longitudinal bars (12) distributed in groups, and at least a metal round piece (13) welded in a spiral around said longitudinal bars (12), **characterized in that** it comprises at least a welding step in which the metal round piece (13) is welded to the longitudinal bars (12) of each group, by means of a welding device (31) provided with at least a welding slider (37) movable transversely to the direction of formation of said reinforcement cage (11), welding means (40), and in which at least two stopping members (41, 42) are each selectively moved between a first position in which it cooperates through contact with one of said longitudinal bars (12) of each group, and holds said welding means (40) in correspondence with a determinate one of said longitudinal bars (12), and a second position in which it does not interfere with said longitudinal bars (12) and allows the relative movement, for at least a segment, of said longitudinal bars (12) and said welding slider (37).

9. Method as in claim 8, **characterized in that** said welding step comprises at least:
- a first step in which the stopping members (41, 42) are in the first position, so that a first stopping member (41) cooperates through contact with a first longitudinal bar (12) of the group, holding the welding means (40) in each group comprising at least two longitudinal bars, correspondence with said first longitudinal bar (12) in order to weld it to the metal round piece (13);
- a second step in which the first stopping member (41) is taken to the second position, while a second stopping member (42) stays in the first position, so as to determine a reciprocal movement of the welding slider (37) and the longitudinal bars (12) until there is contact between the first longitudinal bar (12) and the second stopping member (42), and to position the welding means (40) in correspondence with a second longitudinal bar (12) of the group in order to weld it to the metal round piece (13);
- a third step in which the second stopping member (42) is taken to the second position, freeing the movement of the longitudinal bars (12) welded to the metal round piece (13), with respect to the welding slider (37); and
- a fourth step, in which the stopping members (41, 42) are returned to the first position in order to start a new welding cycle with respect to a new group of longitudinal bars (12).

## Patentansprüche

1. Vorrichtung zur Herstellung von Bewehrungskäfigen (11), die eine Vielzahl von Längsstäben (12) umfassen, welche in Gruppen verteilt sind, wobei jede Gruppe wenigstens zwei Längsstäbe (12) aufweist, und wenigstens ein metallenes Rundstück (13) in einer Spirale um die Längsstäbe (12) herum geschweißt ist, wobei die Vorrichtung wenigstens einen ersten Drehkopf (16) umfasst, an dem die Längsstäbe (12) aufnehmbar sind, und einen zweiten Kopf (17) aufweist, an dem wenigstens eine Schweißeinrichtung (31) aufgenommen ist,
**dadurch gekennzeichnet,dass**
die Schweißeinrichtung (31) wenigstens einen Schweiß-Schlitten oder Läufer (37) umfasst, der quer zur Formungsrichtung des besagten Bewehrungskäfigs (11) bewegbar ist,
Schweißmittel (40) besitzt, die dazu ausgebildet sind, das metallene Rundstück (13) an den Längsstäben (12) einer jeden Gruppe anzuschweißen, und wenigstens zwei Stoppelemente (41,42) aufweist, die jeweils selektivzwischen einer ersten Position, in der das Stoppelement durch einen Kontakt mit einem der besagten Längsstäbe (12) einer jeden Gruppe zusammenwirkt und das besagte Schweißmittel (40) in Übereinstimmung mit einem bestimmten Längsstab der besagten Längsstäbe (12) hält, und einer zweiten Position bewegbar ist, in der das Stoppelement nicht mit den besagten Längsstäben (12) zusammenwirkt und eine relative Bewegung zwischen wenigstens einem Abschnitt der besagten Längsstäbe (12) und dem Schweiß-Schlitten (37) erlaubt.

2. Vorrichtung nach Anspruch 1,
**dadurch gekennzeichnet, dass**
jedes Stoppelement (41, 42) in einer autonomen und unabhängigen Weise in Bezug auf das andere Stoppelement (41, 42) zwischen der ersten Position und der zweiten Position bewegbar ist.

3. Vorrichtung nach einem der vorhergenannten Ansprüche,
**dadurch gekennzeichnet, dass**
der Abstand zwischen den Stoppelementen (41, 42) selektiv in Abhängigkeit vom Durchmesser der Längsstäbe (12) wählbar ist.

4. Vorrichtung nach einem der vorhergenannten Ansprüche,
**dadurch gekennzeichnet, dass**
jedes Stoppelement einen Aktuator (41, 42) aufweist, der quer zur Richtung, in der die Bewehrungskäfige (11) geformt werden, bewegbar ist.

5. Vorrichtung nach einem der vorhergenannten Ansprüche,
**dadurch gekennzeichnet, dass**
die Stoppelemente (41, 42) in Bezug auf die Drehrichtung, die vom ersten Kopf (16) auf die Längsstäbe (12) ausgeübt wird, hintereinander angeordnet sind.

6. Vorrichtung nach einem der vorhergenannten Ansprüche,
**dadurch gekennzeichnet,dass**
die Schweißeinrichtung (31) ebenfalls ein auf den Schweiß-Schlitten (31) wirkendes elastisches oder federelastisches Element (43) aufweist, um den Schweiß-Schlitten (37) elastisch zu bewegen und wenigstens eines der Stoppelemente (41, 42) in Kontakt mit dem zugehörigen Längsstab (12) zu halten, wenn diese sich in ihrer ersten Position befinden.

7. Schweißeinrichtung für eine Vorrichtung zur Herstellung von Bewehrungskäfigen (11), die eine Vielzahl von in Gruppen verteilten Längsstäben (12) und wenigstens ein metallenes Rundstück (13), aufweisen, das in einer Spirale um die besagten Längsstäbe (12) herum geschweißt ist,
**dadurch gekennzeichnet, dass**
diese wenigstens einen quer zur Formungsrichtung des besagten Bewehrungskäfigs (11) bewegbaren Schweiß-Schlitten (37), Schweißmittel (40), die dazu ausgelegt sind, das metallene Rundstück (13) mit den Längsstäben (12) einer jeden Gruppe zu verschweißen, und wenigstens zwei Stoppelemente (41, 42) umfasst, die jeweils selektiv zwischen einer ersten Position, in der das betreffende Stoppelement durch Kontakt mit einem der besagten Längsstäbe (12) einer jeden Gruppe zusammenwirkt und die besagten Schweißmittel (40) in Übereinstimmung mit einem bestimmten Längsstab der Längsstäbe (12) hält, in eine zweite Position bewegbar ist, in der das betreffende Stoppelement (41,42) nicht mit dem besagten Längsstab (12) zusammen wirkt und eine relative Bewegung zwischen wenigstens einem Abschnitt der Längsstäbe (12) und dem besagten Schweiß-Schlitten erlaubt.

8. Verfahren zur Herstellung von Bewehrungskäfigen (11), die eine Vielzahl von in Gruppen verteilten Längsstäben (12) umfassen, von denen eine jede Gruppe wenigstens zwei Längsstäbe besitzt, und die wenigstens ein metallenes Rundstück (13) aufweisen, das in einer Spirale um die Längsstäbe (12) herum geschweißt ist,
**dadurch gekennzeichnet, dass**
dieses wenigstens einen Schweiß-Schritt aufweist, in welchem das metallene Rundstück (13) an die Längsstäbe (12) einer jeden Gruppe mit Hilfe einer Schweißvorrichtung (31) angeschweißt wird, die wenigstens einen Schweiß-Schlitten aufweist, der quer zur Formungsrichtung des Bewehrungskäfigs (11) bewegbar ist, wobei Schweißmittel (40) vorgesehen sind, und wobei wenigstens zwei Stoppelemente (41, 42) jeweils selektiv zwischen einer ersten Position, in der das betreffende Stoppelement durch Kontakt mit einem der Längsstäbe (12) einer jeden Gruppe zusammen wirkt und das besagte Schweißmittel (40) in Übereinstimmung mit einem bestimmten Längsstab der besagten Längsstäbe (12) hält und einer zweiten Position bewegt werden, in der das betreffende Stoppelement nicht mit den besagten Längsstäben (12) zusammen wirkt und eine relative Bewegung zwischen wenigstens einem Abschnitt der besagten Längsstäbe (12) und dem Schweiß-Schlitten (37) erlaubt.

9. Verfahren nach Anspruch 8,
**dadurch gekennzeichnet, dass**
der Verfahrensschritt des Schweißens wenigstens umfasst:
- Einen ersten Schritt, in welchem die Stoppelemente (41, 42) sich in der ersten Position befinden, so dass ein erstes Stoppelement (41) durch Kontakt mit einem ersten Längsstab (12) der Gruppe zusammenwirkt und die Schweißmittel (40) in Übereinstimmung mit dem ersten Längsstab (12) hält, um das metallene Rundstück (13) zu schweißen;
- einen zweiten Schritt, in welchem das erste Stoppelement (41) in die zweite Position bewegt wird, während ein zweites Stoppelement (42) in der ersten Position verbleibt, um eine Hin- und Herbewegung des Schweiß-Schlittens (37) und der Längsstäbe (12) zu bestimmen, bis sich ein Kontakt zwischen dem ersten Längsstab (12) und dem zweiten Stoppelement (42) einstellt, und um die Schweißmittel (40) zum Verschweißen des metallenen Rundstücks (13) mit einem zweiten Längsstab (12) der Gruppe in Übereinstimmung mit diesem zu positionieren;
- einen dritten Schritt, in welchem das zweite Stoppelement (42) in die zweite Position bewegt wird und die Bewegung der mit dem metallenem Rundstück (13) verschweißten Rundstäbe (12) bezüglich des Schweiß-Schlittens (37) freigibt; sowie
- einen vierten Schritt, in welchem die Stoppelemente (41, 42) in die erste Position zurück bewegt werden, um einen neuen Schweißzyklus bezüglich einer neuen Gruppe von Längsstäben (12) zu beginnen.

## Revendications

1. Machine de fabrication de cages d'armature (11) dotées d'une pluralité de barres longitudinales (12) réparties en groupes, chaque groupe comprenant au moins deux barres longitudinales (12), et d'au moins une pièce ronde en métal (13) soudée en spirale autour desdites barres longitudinales (12), ladite machine comprenant au moins une première tête tournante (16) sur laquelle peuvent être associées lesdites barres longitudinales (12), et une seconde tête (17) sur laquelle est monté au moins un dispositif de soudage (31), **caractérisée en ce que** ledit dispositif de soudage (31) comprend au moins un patin de soudage (37) pouvant être déplacé transversalement à la direction de formation de ladite cage d'armature (11), un moyen de soudage (40) permettant de souder la pièce ronde en métal (13) aux barres longitudinales (12) de chaque groupe, et au moins deux butées (41, 42), chacune pouvant être déplacée sélectivement entre une première position dans laquelle elle coopère par contact avec l'une desdites barres longitudinales (12) de chaque groupe et maintient ledit moyen de soudage (40) en correspondance avec une barre déterminée desdites barres longitudinales (12), et une seconde position dans laquelle elle n'interfère pas avec lesdites barres longitudinales (12) et permet le déplacement relatif, pour au moins un segment, desdites barres longitudinales (12) et dudit patin de soudage (37).

2. Machine selon la revendication 1, **caractérisée en ce que** chaque butée (41, 42) peut se déplacer de manière autonome et indépendante par rapport à l'autre butée (41, 42) entre la première et la seconde position.

3. Machine selon l'une quelconque des revendications précédentes, **caractérisée en ce que** la distance entre les butées (41, 42) peut être choisie sélectivement en fonction du diamètre des barres longitudinales (12).

4. Machine selon l'une quelconque des revendications précédentes, **caractérisée en ce que** chaque butée comprend un actionneur (41, 42) pouvant être déplacé transversalement à la direction de formation de ladite cage d'armature (11).

5. Machine selon l'une quelconque des revendications précédentes, **caractérisée en ce que** les butées (41, 42) sont placées l'une derrière l'autre par rapport à la direction de rotation impartie par la première tête (16) aux barres longitudinales (12).

6. Machine selon l'une quelconque des revendications précédentes, **caractérisée en ce que** le dispositif de soudage (31) comprend aussi un élément élastique (43) contraint au patin de soudage (37), de manière à déplacer élastiquement ledit patin de soudage (37) et à maintenir l'une au moins des butées (41, 42) en contact avec la barre longitudinale (12) correspondante, lorsqu'elles se trouvent dans leur première position.

7. Dispositif de soudage pour une machine de fabrication de cages d'armature (11) dotées d'une pluralité de barres longitudinales (12) réparties en groupes, et d'au moins une pièce ronde en métal (13) soudée en spirale autour desdites barres longitudinales (12), **caractérisé en ce qu'**il comprend au moins un patin de soudage (37) pouvant être déplacé transversalement à la direction de formation de ladite cage d'armature (11), un moyen de soudage (40) permettant de souder la pièce ronde en métal (13) aux barres longitudinales (12) de chaque groupe, et au moins deux butées (41, 42), chacune pouvant être déplacée sélectivement entre une première position, dans laquelle elle coopère par contact avec l'une desdites barres longitudinales (12) de chaque groupe et maintient ledit moyen de soudage (40) en correspondance avec une barre déterminée desdites barres longitudinales (12), et une seconde position dans laquelle elle n'interfère pas avec lesdites barres longitudinales (12) et permet le déplacement relatif, pour au moins un segment, desdites barres longitudinales (12) et dudit patin de soudage (37).

8. Procédé de fabrication de cages d'armature (11) dotées d'une pluralité de barres longitudinales (12) réparties en groupes, chaque groupe comprenant au moins deux barres longitudinales, et d'au moins une pièce ronde en métal (13) soudée en spirale autour desdites barres longitudinales (12), **caractérisé en ce qu'**il comprend au moins une étape de soudage consistant à souder la pièce ronde en métal (13) aux barres longitudinales (12) de chaque groupe, au moyen d'un dispositif de soudage (31) doté d'au moins un patin de soudage (37) pouvant être déplacé transversalement à la direction de formation de ladite cage d'armature (11), un moyen de soudage (40), et à déplacer sélectivement chacune d'au moins deux butées (41, 42) entre une première position, dans laquelle elle coopère par contact avec l'une desdites barres longitudinales (12) de chaque groupe et maintient ledit moyen de soudage (40) en correspondance avec une barre déterminée desdites barres longitudinales (12), et une seconde position dans laquelle elle n'interfère pas avec lesdites barres longitudinales (12) et permet le déplacement relatif, pour au moins un segment, desdites barres longitudinales (12) et dudit patin de soudage (37).

9. Procédé selon la revendication 8, **caractérisé en ce que** ladite étape de soudage comprend au moins :
- une première étape dans laquelle les butées (41, 42) se trouvent dans la première position, de sorte qu'une première butée (41) coopère par contact avec une première barre longitudinale (12) du groupe, en maintenant le moyen de soudage (40) en correspondance avec ladite première barre longitudinale (12) afin de la souder à la pièce ronde en métal (13) ;
- une seconde étape consistant à amener la première butée (41) dans la seconde position, tandis qu'une seconde butée (42) reste dans la première position de manière à définir un déplacement réciproque du patin de soudage (37) et des barres longitudinales (12) jusqu'à ce qu'il y ait contact entre la première barre longitudinale (12) et la seconde butée (42), et de manière à placer le moyen de soudage (40) en correspondance avec une seconde barre longitudinale (12) du groupe afin de la souder à la pièce ronde en métal (13) ;
- une troisième étape consistant à amener la seconde butée (42) dans la seconde position, en libérant ainsi le déplacement, par rapport au patin de soudage (37), des barres longitudinales (12) soudées à la pièce ronde en métal (13) ; et
- une quatrième étape consistant à ramener les butées (41, 42) dans la première position afin de commencer un nouveau cycle de soudage sur un nouveau groupe de barres longitudinales (12).
